# EUROPÄISCHE PATENTANMELDUNG

(11) **EP 1 683 685 A2**
(43) Veröffentlichungstag der Anmeldung: **26.07.2006**
(21) Anmeldenummer: 05028737.4
(22) Anmeldetag: 30.12.2005
(51) Int. Cl.: B60R 21/16

(54) **Gassack für eine Fahrzeuginsassen-Rückhaltevorrichtung**

(30) Priorität: 19.01.2005 DE 202005000818 U
(71) Anmelder: TRW Automotive Safety Systems GmbH, 63743 Aschaffenburg (DE)
(72) Erfinder: Deckenhoff, Michael, 48249 Dülmen (DE)
(74) Vertreter: Strass, Jürgen

(57) **Zusammenfassung**

Ein Gassack für eine Fahrzeuginsassen-Rückhaltevorrichtung weist eine aus wenigstens einem Gewebeteil (12) gebildete Gassackwand und eine an der Gassackwand angeordnete elektrisch ansteuerbare Einrichtung (14) auf. Der Gassack (10) umaßt ferner einen elektrischen Leiter (16). Das Gewebeteil (12) und der elektrische Leiter (16) bilden eine vormontierte Einheit.

## Beschreibung

Die Erfindung betrifft einen Gassack für eine Fahrzeuginsassen-Rückhaltevorrichtung, mit einer aus wenigstens einem Gewebeteil gebildeten Gassackwand und einer an der Gassackwand angeordneten elektrisch ansteuerbaren Einrichtung. Die Erfindung betrifft ferner ein Gassackmodul mit einem solchen Gassack.

Es sind Gassäcke bekannt, bei denen unter bestimmten Umständen Abströmöffnungen im Gassackgewebe durch aktive Einrichtungen zu einem definierten Zeitpunkt freigegeben werden können. Die GB-A-2 306 409 zeigt einen Gassack der eingangs genannten Art, der mit einer pyrotechnischen Ladung versehen ist. Die pyrotechnische Ladung kann über eine elektrische Zuleitung gezündet werden, um eine Abströmöffnung für das im Gassack befindliche Gas bereitzustellen.

Der Zusammenbau eines Gassackmoduls mit einem solchen Gassack wird jedoch dadurch erschwert, daß die elektrische Zuleitung für die an der Gassackwand angeordnete elektrisch ansteuerbare Einrichtung in geeigneter Weise im Modul untergebracht werden muß. Es ist ferner zu beachten, daß die elektrische Zuleitung bei der Entfaltung des Gassacks nicht beschädigt wird und umgekehrt die Entfaltung des Gassacks nicht behindert.

Die Erfindung schafft einen Gassack mit einer elektrisch ansteuerbaren Einrichtung, bei dem die Gassackmodulmontage bezüglich der oben genannten Kriterien vereinfacht ist.

Gemäß der Erfindung ist bei einem Gassack der eingangs genannten Art vorgesehen, daß der Gassack ferner einen elektrischen Leiter umfaßt und das Gewebeteil und der elektrische Leiter eine vormontierte Einheit bilden. Der erfindungsgemäße Gassack hat den Vorteil, daß keine Montagefehler bei der Unterbringung der elektrischen Zuleitung für die elektrisch ansteuerbare Einrichtung auftreten können, da die Positionierung der elektrischen Zuleitung bereits vor dem endgültigen Zusammenbau des Gassackmoduls erledigt ist. Dadurch ist sichergestellt, daß der elektrische Leiter in der gewünschten Weise am Gewebeteil fixiert ist, so daß eine zuverlässige, reproduzierbare elektrische Anbindung der elektrischen Einrichtung hergestellt ist.

Vorzugsweise ist der elektrische Leiter in das Gewebeteil integriert, d.h. der elektrische Leiter kann nicht ohne weiteres vom Gewebeteil entfernt werden.

Der elektrische Leiter kann insbesondere in das Gewebeteil eingewebt, auf das Gewebeteil aufgeklebt oder in das Gewebeteil eingenäht sein. Der elektrische Leiter kann dabei auf der Außenseite oder der Innenseite des Gassacks oder zwischen zwei oder mehreren Gewebelagen angeordnet sein.

Um Störungen auszuschließen, kann der elektrische Leiter wenigstens teilweise von einem Isolator umhüllt sein, insbesondere in Form einer Beschichtung oder Ummantelung.

Die Erfindung schafft auch ein Gassackmodul mit einem erfindungsgemäßen Gassack, bei dem der elektrische Leiter einerseits direkt oder indirekt mit einem Steuergerät und andererseits direkt oder indirekt mit der elektrischen Einrichtung verbunden ist. Der elektrische Leiter wird in diesem Fall zur Ansteuerung der elektrischen Einrichtung genutzt.

Gemäß einem anderen Aspekt sieht die Erfindung ein Gassackmodul mit einem erfindungsgemäßen Gassack vor, bei dem der elektrische Leiter eine Erdung für die elektrisch ansteuerbare Einrichtung darstellt.

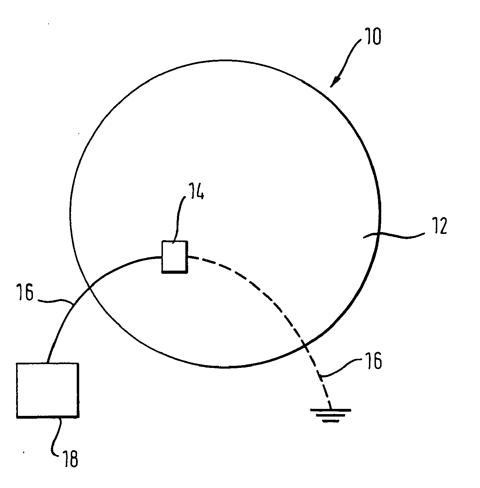

Die Erfindung wird nachfolgend anhand eines Ausführungsbeispiels unter Bezugnahme auf die beigefügte Zeichnung beschrieben. In der Zeichnung zeigt die einzige Figur schematisch einen erfindungsgemäßen Gassack.

In der Figur ist ein aufgeblasener Gassack 10 mit einer Gassackwand dargestellt, die aus einem oder mehreren Gewebeteilen 12 gebildet ist. An der Gassackwand ist eine elektrische Einrichtung 14 angebracht, die elektrisch ansteuerbar ist und dazu dient, bei Bedarf eine Abströmöffnung in der Gassackwand herzustellen.

Die elektrische Einrichtung 14 ist hierzu über einen elektrischen Leiter 16 mit einer Steuervorrichtung 18 verbunden, die die Aktivierung der elektrischen Einrichtung 14 veranlaßt. Der elektrische Leiter 16 kann, wie im einleitenden Teil der Beschreibung beschrieben, auf verschiedene Weise in das Gewebeteil 12 integriert und gegebenenfalls von einem Isolator umhüllt sein.

Zusammen mit dem Gewebeteil 12 bildet der elektrische Leiter 16 eine vormontierte Einheit für den Zusammenbau eines mit dem Gassack 10 ausgestatteten Gassackmoduls.

Gemäß einem anderen Aspekt der Erfindung kann der elektrische Leiter 16 auch zur Erdung der elektrischen Einrichtung 14 dienen.

## Patentansprüche

1. Gassack für eine Fahrzeuginsassen-Rückhaltevorrichtung, mit einer aus wenigstens einem Gewebeteil (12) gebildeten Gassackwand und einer an der Gassackwand angeordneten elektrisch ansteuerbaren Einrichtung (14), **dadurch gekennzeichnet, daß** der Gassack (10) ferner einen elektrischen Leiter (16) umfaßt und das Gewebeteil (12) und der elektrische Leiter (16) eine vormontierte Einheit bilden.

2. Gassack nach Anspruch 1, **dadurch gekennzeichnet, daß** der elektrische Leiter (16) in das Gewebeteil (12) integriert ist.

3. Gassack nach Anspruch 2, **dadurch gekennzeichnet, daß** der elektrische Leiter (16) in das Gewebeteil (12) eingewebt ist.

4. Gassack nach Anspruch 2, **dadurch gekennzeichnet, daß** der elektrische Leiter (16) auf das Gewebeteil (12) aufgeklebt ist.

5. Gassack nach Anspruch 2, **dadurch gekennzeichnet, daß** der elektrische Leiter (16) in das Gewebeteil (12) eingenäht ist.

6. Gassack nach Anspruch 2, **dadurch gekennzeichnet, daß** der elektrische Leiter (16) zwischen zwei oder mehreren Gewebelagen angeordnet ist.

7. Gassack nach einem der vorhergehenden Ansprüche, **dadurch gekennzeichnet, daß** der elektrische Leiter (16) wenigstens teilweise von einem Isolator umhüllt ist.

8. Gassackmodul mit einem Gassack (10) nach einem der Ansprüche 1 bis 7, **dadurch gekennzeichnet, daß** der elektrische Leiter (16) einerseits direkt oder indirekt mit einem Steuergerät (18) und andererseits direkt oder indirekt mit der elektrischen Einrichtung (14) verbunden ist.

9. Gassackmodul mit einem Gassack (10) nach einem der Ansprüche 1 bis 7, **dadurch gekennzeichnet, daß** der elektrische Leiter (16) eine Erdung für die elektrisch ansteuerbare Einrichtung darstellt.
